# EUROPEAN PATENT SPECIFICATION

(11) **EP 4 682 706 B1**
(45) Date of publication and mention of the grant of the patent: **07.10.2026**
(21) Application number: 25176780.2
(22) Date of filing: 15.05.2025
(51) Int. Cl.: G06F 7/58

(54) **GATED DIODE-BASED TRUE RANDOM NUMBER GENERATOR CAPABLE OF ENCRYPTING INFORMATION**
AUF TORGESCHALTETEN DIODEN BASIERENDER ECHTEN ZUFALLSZAHLENGENERATOR ZUR VERSCHLÜSSELUNG VON INFORMATIONEN
GÉNÉRATEUR DE NOMBRES ALÉATOIRES RÉELS À BASE DE DIODES À DÉCLENCHEMENT PERMETTANT DE CHIFFRER DES INFORMATIONS

(30) Priority: 19.07.2024 KR 20240095589
(43) Date of publication of application: 21.01.2026
(73) Proprietor: Korea University Research and Business Foundation, Seoul 02841 (KR)
(72) Inventor: KIM, Sang Sig, 06630 Seoul (KR); CHO, Kyoung Ah, 04989 Seoul (KR); JEON, Ju Hee, 03773 Seoul (KR)
(74) Representative: Prüfer & Partner mbB Patentanwälte · Rechtsanwälte

(56) References cited:
- US-A1- 2018 067 723
- SHUBHAM SAHAY ET AL: "Recent trends in hardware security exploiting hybrid CMOS-resistive memory circuits", SEMICONDUCTOR SCIENCE TECHNOLOGY, IOP PUBLISHING LTD, GB, vol. 32, no. 12, 26 October 2017 (2017-10-26), pages 123001, XP020321756, ISSN: 0268-1242, [retrieved on 20171026], DOI: 10.1088/1361-6641/AA8F07

## Description

### CROSS-REFERENCE TO RELATED APPLICATION

This application claims priority to Korean Patent Application No. 10-2024-0095589, filed on July 19, 2024 in the Korean Intellectual Property Office.

### BACKGROUND OF THE DISCLOSURE

### Field of the Disclosure

The present disclosure relates to a gated diode-based true random number generator capable of encrypting information, and more particularly a technology of providing a true random number generator that implements information encryption by generating a random bit through a probabilistic switching operation via the feedback loop phenomenon in the channel region of a gated diode while controlling the probability of occurrence of the random bit through voltage application control.

### Description of the Related Art

As the Internet of Things has become widespread recently, edge devices such as smartphones act as authentication hubs for financial transactions, personal information uploads, etc., and the importance of security technology in edge devices is increasing.

In particular, the random number generator (RNG) is receiving much attention because it generates a security key that is the basis of security technology.

RNG can generally be divided into two types: a pseudo random number generator (PRNG) and a true random number generator (TRNG).

Thereamong, PRNG using a mathematical algorithm is vulnerable to security due to its deterministic nature using an initial seed.

On the other hand, TRNG is impossible to replicate because it utilizes physical probabilistic characteristics, thereby being capable of increasing the level of security.

Technologies that utilize the randomness of non-silicon channel materials, such as conventional ferroelectric random-access memory (FRAM), resistive RAM (ReRAM), and magnetic RAM (MRAM), require peripheral circuits to convert entropy sources into random bits.

In addition, the uniformity and stability of devices are poor, and it is difficult to put them into practice because the CMOS process cannot be applied.

True random number generator technology, which utilizes noise generated in circuits, such as SRAM metastability or a ring oscillator (RO) jitter can be easily manufactured through the CMOS process and has the advantage of being able to generate stable random bit strings in hardware.

However, the SRAM metastability method usually requires a post-processing process, and in the case of the ring oscillator (RO) jitter, multiple ring oscillator stages and some digital circuits are needed. Thus, a circuit area occupied by an implemented true random number generator is very large, which limits its integration and energy consumption.

In an attempt to reduce a noise source from a circuit to a single element, a true random number generator technology using random telegraph noise (RTN) generated from a MOSFET single element has been developed.

However, the results of RTN show currents of hundreds of nA or more, so additional circuits are required to amplify them, and there is a limitation in that a post-processing process is required to eliminate the bias of the output signal.

Recently, a true random number generator technology, which does not require a post-processing process due to randomness caused by impact ionization in Fin-FET devices, has been developed.

This did not overcome the limitation that amplification and sampling circuits were needed to convert voltage fluctuations of hundreds of m V into random bits.

To secure high-quality randomness, technologies utilizing non-silicon channel material characteristics such as filament formation, spin flip, and polarization are being developed.

However, an amplification process using a comparator or a sense amplifier is required due to the small fluctuation range of several hundred mV, and depending on the type, an extraction step is added to convert an entropy source into random bits.

For example, when stochastic delay is used as an entropy source, a clock signal is compared with an AND gate, and a random bit string is measured with a counter circuit.

Accordingly, additional auxiliary circuits are required, but the uniformity and stability of devices are poor, and mass production would be difficult because the CMOS process cannot be applied.

Therefore, there is a need to develop a true random number generator technology that can be applied to the CMOS process, has excellent device stability, and can generate random bit strings without complex additional circuits by using a gated diode (gated p-i-n diode) that amplifies random fluctuations on its own.

### [Related Art Documents]

### [Patent Documents]

Korean Patent Application Publication No. 10-2023-0053195, entitled "STATEFUL LOGIC-IN-MEMORY ARRAY USING SILICON DIODES"

Korean Patent Application Publication No. 10-2023-0011092, entitled "RING OSCILLATOR, RANDOM NUMBER GENERATOR INCLUDING SAME, AND OPERATION METHOD OF RANDOM NUMBER GENERATOR"

Korean Patent Application Publication No. 10-2023-0020840, entitled "RECONFIGURABLE LOGIC-IN-MEMORY DE VICE USING SILICON TRANSISTOR"

Korean Patent No.10-2200488, entitled "APPARATUS FOR GENERATING DIGITAL RADOM NUMBER HA VING MULTIPLE CHALLENGE RESPONSE PAIRS"

### SUMMARY OF THE DISCLOSURE

Therefore, the present disclosure has been made in view of the above problems, and it is an object of the present disclosure to provide a true random number generator that implements information encryption by generating a random bit through a probabilistic switching operation via the feedback loop phenomenon in the channel region of a gated diode while controlling the probability of occurrence of the random bit through voltage application control.

It is another object of the present disclosure to implement a true random number generator that generates a random bit string in a simple structure without complex additional circuits by utilizing the feedback loop process of the channel region to utilize a gated diode that amplifies random fluctuation characteristics.

It is still another object of the present disclosure to implement probability computing by controlling the probability of a random bit string in the true random number generator through voltage application.

It is yet another object of the present disclosure to implement the physical unclonable function (PUF) technology by stably generating a random number and generating a physically unduplicable random bit string through the gated diode-based true random number generator utilizing a CMOS process.

**In** accordance with an aspect of the present disclosure, the above and other objects can be accomplished by the provision of a gated diode-based true random number generator, including:
a gated diode where a p⁺-i-n⁺ diode structure is positioned between a drain terminal and a source terminal, a gate-insulating film is positioned on an intrinsic region of the p⁺-i-n⁺ diode structure, and two gate terminals are positioned on the gate-insulating film; and a control transistor where a control drain terminal is connected to the source terminal, wherein the control gate terminal and the control source terminal are constituted together with the control drain terminal, and the control transistor controls electron injection into the p⁺-i-n⁺ diode structure according to control of a gate voltage V_{MOS} applied through the control gate terminal, wherein the gated diode forms a potential barrier in an intrinsic region by electrostatic doping as the intrinsic region changes to one of an n* channel region and a p* channel region based on different voltages applied through the two gate terminals, and outputs a random bit as one of a positive feedback loop and a negative feedback loop related to the formed potential barrier is randomly formed according to electron injection fluctuations based on the controlled electron injection.

The gated diode may include a p⁺ drain region between the first gate terminal of the two gate terminals and the drain terminal, and, when a positive voltage is applied to the first gate terminal, a region under the first gate terminal in the intrinsic region includes an n* channel region, the n⁺ source region is included between the second gate terminal of the two gate terminals and the source terminal, and, when a negative voltage is applied to the second gate terminal, a region under the second gate terminal in the intrinsic region includes a p* channel region.

The gated diode may form a positive feedback loop when the injected electrons are greater than reference electrons for forming positive feedback that latch-up a current based on the controlled electron injection, and a negative feedback loop phenomenon that the positive feedback loop is not formed may be repeated when the injected electrons are less than the reference electrons, so that a current randomly fluctuates just before the latch-up.

Concerning first and second gate voltage pulses applied through the first gate terminal and second gate terminal among the two gate terminals when a drain supply voltage is input through the drain terminal, the gated diode may generate and output a positive bit "1" as the positive feedback loop is formed, and generate a negative bit "0" as the negative feedback loop is formed.

The control transistor may induce a probabilistic region within the intrinsic region of the gated diode by controlling electron injection into the p⁺-i-n⁺ diode structure.

Concerning the first gate voltage pulse and second gate voltage pulse applied through the first gate terminal and second gate terminal among the two gate terminals when a drain supply voltage is input through the drain terminal, the gated diode randomly outputs one of a positive bit "1" and a negative bit "0" as an output voltage may be randomly determined.

The gated diode may control a height of the potential barrier as voltage applied through the second gate terminal is adjusted and a probability of forming a positive feedback loop based on the controlled potential barrier height.

The gated diode may increase an output probability of the positive bit "1" by lowering the height of the potential barrier when the voltage applied through the second gate terminal increases, and increase an output probability of the negative bit "0" by increasing the height of the potential barrier when the voltage applied through the second gate terminal decreases.

The outputted random bit may be converted into an image format based on pixel information composed of a random bit string and based on binary data to generate a security key, and converted into encrypted data by XOR-encrypting an original image using the generated security key.

The encrypted data may be encrypted in a form of a random noise image and decrypted only with the generated security key.

### BRIEF DESCRIPTION OF THE DRAWINGS

The above and other objects, features and other advantages of the present disclosure will be more clearly understood from the following detailed description taken in conjunction with the accompanying drawings, in which:
FIGS. 1A and 1B are diagrams for explaining the structure and operation characteristics of a gated diode constituting a gated diode-based true random number generator according to an embodiment of the present disclosure;
FIGS. 2A and 2B are drawings for explaining the electrical characteristics of the gated diode constituting the gated diode-based true random number generator according to an embodiment of the present disclosure;
FIGS. 3A and 3B illustrate the gated diode-based true random number generator according to an embodiment of the present disclosure;
FIGS. 3C and 3D are drawings for explaining the principle and result of generating a random bit of the gated diode-based true random number generator according to an embodiment of the present disclosure;
FIGS. 4A and 4B are drawings for explaining the probability control function of the gated diode-based true random number generator according to an embodiment of the present disclosure;
FIGS. 5A and 5B are drawings for explaining verification simulation results for the randomness of a random bit string generated by the gated diode-based true random number generator according to an embodiment of the present disclosure;
FIGS. 6A and 6B are drawings for explaining a gated diode-based true random number generator according to an embodiment of the present disclosure and its operating characteristics; and
FIGS. 7A to 8 are drawings for explaining information encryption of using the gated diode-based true random number generator according to an embodiment of the present disclosure.

### DETAILED DESCRIPTION OF THE DISCLOSURE

The embodiments will be described in detail herein with reference to the drawings.

However, it should be understood that the present disclosure is not limited to the embodiments according to the concept of the present disclosure, but includes changes, equivalents, or alternatives falling within the scope of the present disclosure.

In the following description of the present disclosure, a detailed description of known functions and configurations incorporated herein will be omitted when it may make the subject matter of the present disclosure unclear.

The terms used in the specification are defined in consideration of functions used in the present disclosure, and can be changed according to the intent or conventionally used methods of clients, operators, and users. Accordingly, definitions of the terms should be understood on the basis of the entire description of the present specification.

In description of the drawings, like reference numerals may be used for similar elements

The singular expressions in the present specification may encompass plural expressions unless clearly specified otherwise in context.

In this specification, expressions such as "A or B" and "at least one of A and/or B" may include all possible combinations of the items listed together.

Expressions such as "first" and "second" may be used to qualify the elements irrespective of order or importance, and are used to distinguish one element from another and do not limit the elements.

It will be understood that when an element (e.g., first) is referred to as being "connected to" or "coupled to" another element (e.g., second), it may be directly connected or coupled to the other element or an intervening element (e.g., third) may be present.

As used herein, "configured to" may be used interchangeably with, for example, "suitable for", "ability to", "changed to", "made to", "capable of", or "designed to" in terms of hardware or software.

In some situations, the expression "device configured to" may mean that the device "may do ~" with other devices or components.

For example, in the sentence "processor configured to perform A, B, and C", the processor may refer to a general purpose processor (e.g., CPU or application processor) capable of performing corresponding operation by running a dedicated processor (e.g., embedded processor) for performing the corresponding operation, or one or more software programs stored in a memory device.

In addition, the expression "or" means "inclusive or" rather than "exclusive or".

That is, unless otherwise mentioned or clearly inferred from context, the expression "x uses a or b" means any one of natural inclusive permutations.

Terms, such as "unit" or "module", etc., should be understood as a unit that processes at least one function or operation and that may be embodied in a hardware manner, a software manner, or a combination of the hardware manner and the software manner.

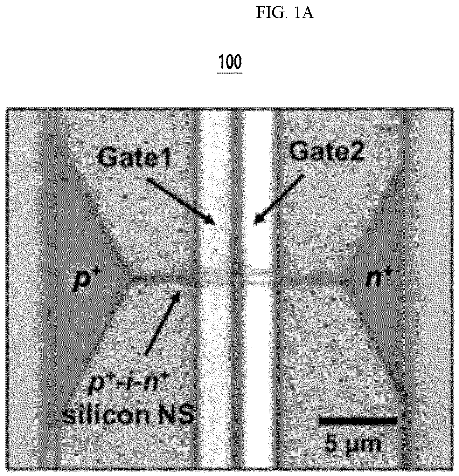

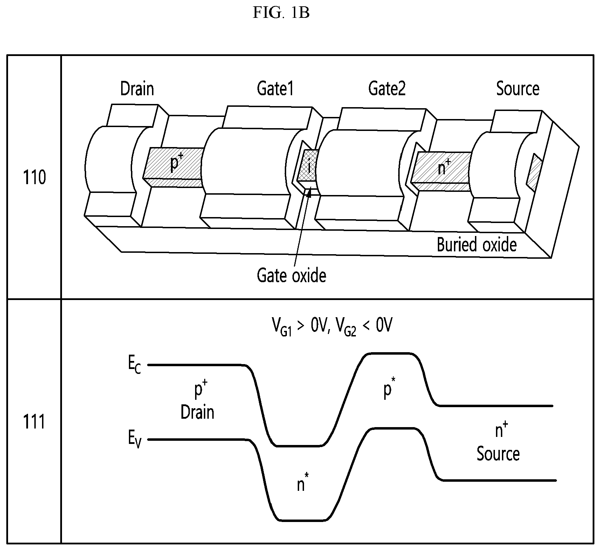

FIGS. 1A and 1B are diagrams for explaining the structure and operation characteristics of a gated diode constituting a gated diode-based true random number generator according to an embodiment of the present disclosure.

FIG. 1A illustrates the optical image of the gated diode constituting the gated diode-based true random number generator according to an embodiment of the present disclosure.

Referring to FIG. 1A, in an optical image 100, a p⁺-i-n⁺ silicon nanosheet (NS) on an oxide is surrounded by a gated diode polysilicon gate electrode and an oxide silicon gate oxide layer.

The width and height of the silicon nanosheet may be 180 nm and 80 nm, respectively, without being limited thereto.

FIG. 1B illustrates the structural diagram of the gated diode constituting the gated diode-based true random number generator according to an embodiment of the present disclosure.

FIG. 1B illustrates the structure 110 of the gated diode constituting the gated diode-based true random number generator according to an embodiment of the present disclosure, and an operation state 111 dependent upon a gate voltage applied to the gate electrode.

In the gated diode structure 110, two polysilicon gate electrodes (a first gate and a second gate) may be arranged side by side at a 1 µm interval in an intrinsic channel.

According to the operation state 111, a positive bias is applied to the first gate, and a negative bias is applied to the second gate, so that a potential barrier toward a drain region and a source region may be induced through n-type and p-type virtual doping in the intrinsic channel.

In summary, the operation state 111 shows that a potential barrier is formed in the channel by electrostatic doping when a first gate voltage is applied as a positive voltage and a second gate voltage is applied as a negative voltage.

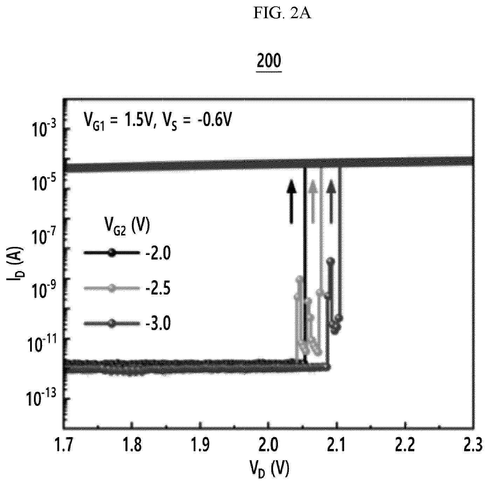

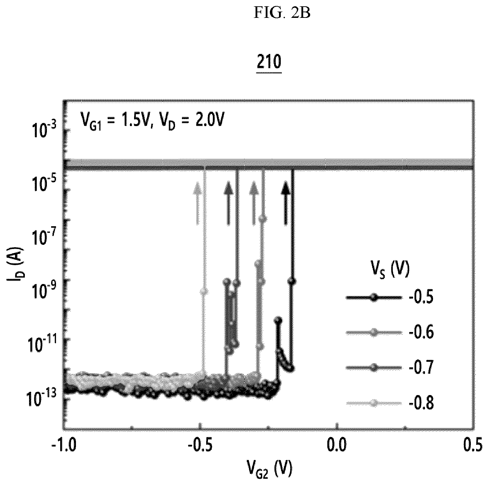

FIGS. 2A and 2B are drawings for explaining the electrical characteristics of the gated diode constituting the gated diode-based true random number generator according to an embodiment of the present disclosure.

FIG. 2A illustrates the output curve of a gated diode in relation to the electrical characteristics of the gated diode constituting the gated diode-based true random number generator according to an embodiment of the present disclosure.

Referring to FIG. 2A, a graph 200 shows that, when a voltage V_{G1} of the first gate and a voltage V_{G2} of the second gate voltage are 1.5 V and -2.0 V, respectively, a drain current I_{D} is latched at a drain voltage V_{D} of 2.05 V, showing a typical I- V characteristic of a gated diode.

It can be confirmed that, since a charge carrier is repeatedly injected into and accumulated in the channel as the drain voltage V_{D} increases, a potential barrier collapses immediately as a positive feedback loop is activated.

Meanwhile, it can be confirmed that the gated diode shows current fluctuations before latch-up as the second gate voltage (V_{G2}) changes from -2.0 V to -3.0 V.

FIG. 2B illustrates current fluctuations in a transfer curve in relation to the electrical characteristics of the gated diode constituting the gated diode-based true random number generator according to an embodiment of the present disclosure.

Referring to FIG. 2B, a graph 210 shows that, when the second gate voltage V_{G2} is swept from -1.0 V to 0.5 V, the drain current I_{D} is clearly latched up at a source voltage V_{S} of -0.8 V.

On the other hand, the drain current I_{D} confirms that there was a variation before the latch-up in a source voltage V_{S} range of -0.7 V to -0.5 V.

When electron injection is limited as the second gate voltage V_{G2} is increased or the source voltage V_{S} is decreased, repetitive current fluctuations may occur in a probabilistic region before latch-up.

Insufficient electron injection is shown to be the cause of current fluctuations when the generation of a positive feedback loop is attempted but stopped.

It can be confirmed from the graphs 200 and 210 that a positive feedback is formed in the channel when electron injection is sufficient, so the characteristics of the feedback field effect wherein a current is latched up, and the characteristics that a current randomly fluctuates just before the latch-up where the phenomenon that a positive feedback loop is formed but fails is repeated when electron injection is limited by controlling a gate or source voltage can be confirmed.

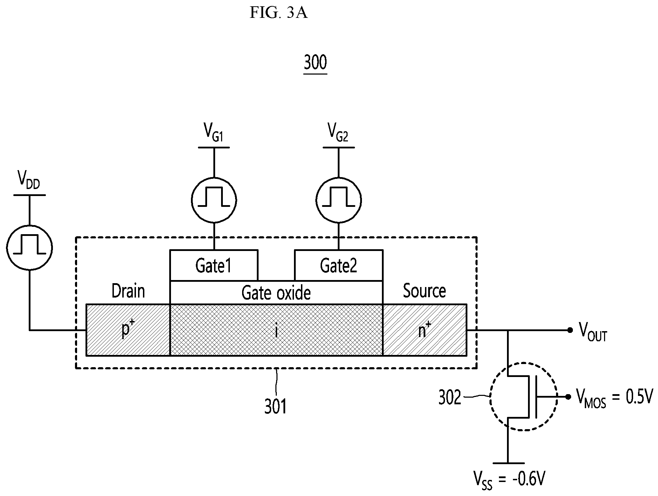

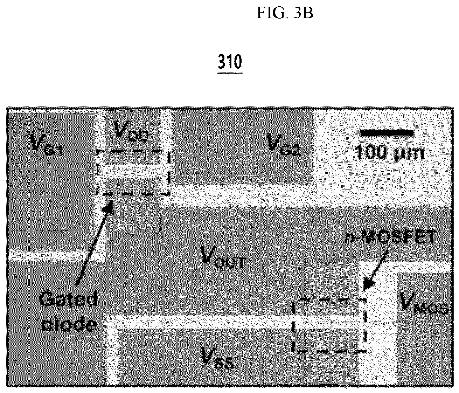

FIGS. 3A and 3B illustrate the gated diode-based true random number generator according to an embodiment of the present disclosure.

FIG. 3A illustrates components of the gated diode-based true random number generator according to an embodiment of the present disclosure.

Referring to FIG. 3A, a gated diode-based true random number generator 300 according to an embodiment of the present disclosure includes a gated diode 301 and a control transistor 302.

The gated diode 301 is a CMOS process-based gated p-i-n diode, and the control transistor 302 may be used as MOSFET.

In the gated diode 301, a p⁺-i-n⁺ diode structure is positioned between a drain terminal and a source terminal, a gate-insulating film is positioned on the intrinsic region of the p⁺-i-n⁺ diode structure, and two gate terminals are positioned on the gate-insulating film.

For example, the intrinsic region may correspond to a region i of the p⁺-i-n⁺ diode structure.

A control drain terminal of the control transistor 302 is connected to a source terminal of the gated diode 301.

The control transistor 302 is configured with a control gate terminal and a control source terminal together with a control drain terminal, and may control electron injection into the p⁺-i-n⁺ diode structure according to the control of a gate voltage V_{MOS} applied through the control gate terminal.

The gated diode 301 forms a potential barrier in an intrinsic region by electrostatic doping as the intrinsic region changes to one of an n* channel region and a p* channel region based on different voltages applied through the two gate terminals.

In addition, the gated diode 301 may output a random bit as one of a positive feedback loop and a negative feedback loop related to the formed potential barrier is randomly formed according to electron injection fluctuations based on the controlled electron injection.

The gated diode 301 includes a p⁺ drain region between the first gate terminal of the two gate terminals and the drain terminal, and, when a positive voltage is applied to the first gate terminal, a region under the first gate terminal in the intrinsic region includes an n* channel region.

In addition, the gated diode 301 includes an n⁺ source region between the second gate terminal of the two gate terminals and the source terminal, and, when a negative voltage is applied to the second gate terminal, a region under the second gate terminal in the intrinsic region may include a p* channel region.

The gated diode 301 forms a positive feedback loop when the injected electrons are greater than reference electrons for forming positive feedback that latch-up a current based on the controlled electron injection, and the negative feedback loop phenomenon that the positive feedback loop is not formed is repeated when the injected electrons are less than the reference electrons, so that a current may randomly fluctuate just before the latch-up.

The gated diode 301 may output a voltage such that, concerning the first gate voltage pulse and second gate voltage pulse applied through the first gate terminal and second gate terminal among the two gate terminals when a drain supply voltage is input through the drain terminal, a positive bit "1" is generated and output as the positive feedback loop is formed, and a negative bit "0" is generated as the negative feedback loop is formed.

The control transistor 302 may induce a probabilistic region within the intrinsic region of the gated diode by controlling electron injection into the p⁺-i-n⁺ diode structure.

Concerning the first gate voltage pulse and second gate voltage pulse applied through the first gate terminal and second gate terminal among the two gate terminals when a drain supply voltage is input through the drain terminal, the gated diode 301 may randomly output one of the positive bit "1" and the negative bit "0" as an output voltage is randomly determined.

The gated diode 301 may control the height of the potential barrier as the voltage applied through the second gate terminal is adjusted and the probability of forming a positive feedback loop based on the controlled potential barrier height.

The gated diode 301 may increase the output probability of the positive bit "1" by lowering the height of the potential barrier when the voltage applied through the second gate terminal increases, and may increase the output probability of the negative bit "0" by increasing the height of the potential barrier when the voltage applied through the second gate terminal decreases.

Accordingly, the present disclosure may provide a true random number generator that implements information encryption by generating a random bit through the probabilistic switching operation via the feedback loop phenomenon in the channel region of the gated diode while controlling the probability of occurrence of the random bit through voltage application control.

FIG. 3B illustrates the optical image of the gated diode-based true random number generator according to an embodiment of the present disclosure.

Referring to FIG. 3B, an optical image 310 illustrates an embodiment where a gated diode and a control transistor are applied to operate a true random number generator.

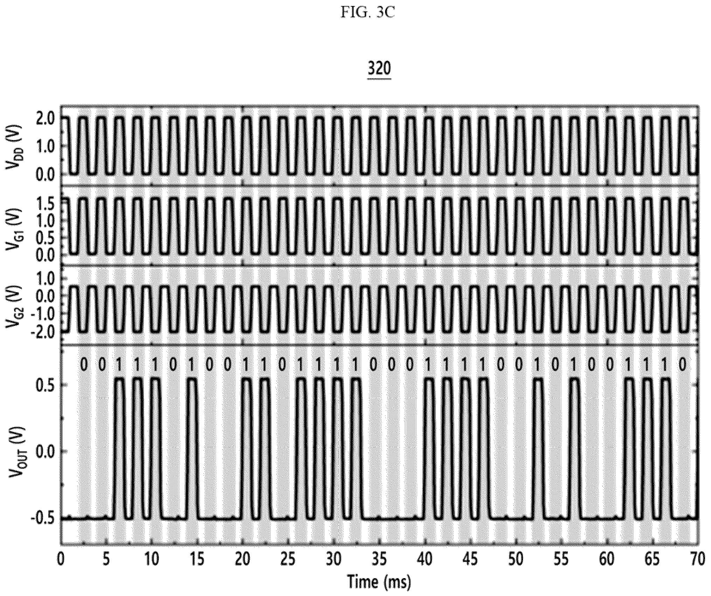

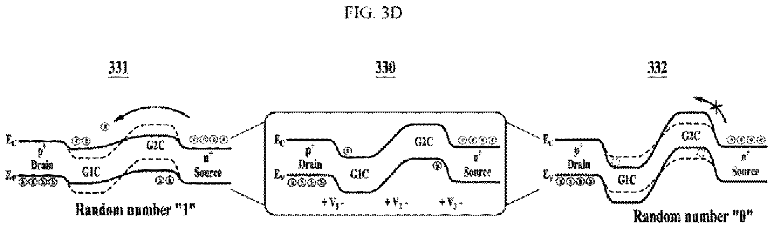

FIGS. 3C and 3D are drawings for explaining the principle and result of generating a random bit of the gated diode-based true random number generator according to an embodiment of the present disclosure.

FIG. 3C illustrates a timing diagram related to the principle and result of generating a random bit of the gated diode-based true random number generator according to an embodiment of the present disclosure.

Referring to FIG. 3C, a timing diagram 320 shows a transient response of the true random number generator which randomly switches between random bits "0" and "1" in an output voltage V_{OUT} between -0.5 V and 0.5 V.

The true random number generator according to an embodiment of the present disclosure exhibits a random bit sequence of '0011101001101111000111100101001110' in response to the same input pulse.

The randomness of TRNG is shown by performing NIST test 22 shown in Table 1 below:

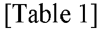

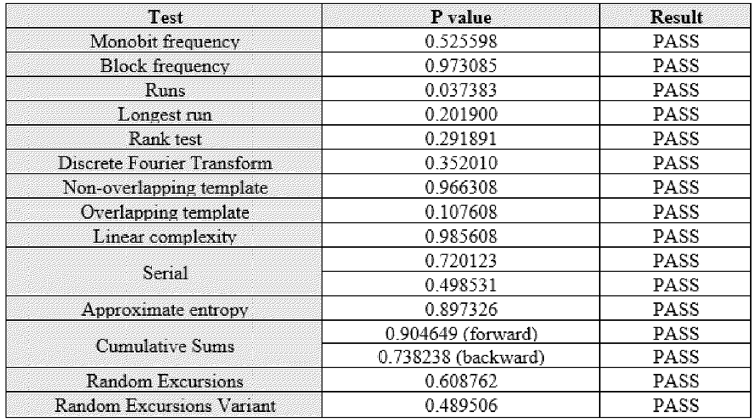

FIG. 3C illustrates a random bit generation mechanism for the principle and result of generating a random bit of the gated diode-based true random number generator according to an embodiment of the present disclosure.

Referring to FIG. 3C, the gated diode-based true random number generator according to an embodiment of the present disclosure utilizes probabilistic switching induced in the gated diode by adjusting the resistance of a control transistor (n-MOSFET) as an entropy source.

The gated diode in the probability region is biased to positive or negative feedback according to the random fluctuation of electron injection.

When the electron injection is sufficient in a base state 330, TRNG indicates a random bit "1" in a positive state 331 promoted by positive feedback within the gated diode.

Conversely, when electron injection is insufficient in the base state 330, the true random number generator indicates a random bit "0" due to negative feedback 332 within the gated diode.

A feedback process activated by the random fluctuation of the probability region may induce the fluctuation of a drain-side junction voltage V₁ by changing the potential barrier height of the channel region under the first gate terminal when the number of electrons accumulated in the channel region under the first gate terminal changes according to the fluctuation of the electron injection in the source.

Accordingly, the fluctuation (V₁ +ΔV₁) of V₁ due to an electron current fluctuation (Iₙ +ΔIₙ) may be induced according to Mathematical Equation 1 below using a p-n diode current model: [Mathematical Equation 1] ${V}_{1} + Δ {V}_{1} = {V}_{T} ⋅ ln \left(\frac{{I}_{n} + Δ {I}_{n} - {I}_{Rd}}{{I}_{sn}}+1\right)$

In Mathematical Equation 1, V_{T} may denote a thermal voltage, $\frac{kT}{q} ,$, I_{Rd} may denote a recombination current at a drain-side junction, and Iₛₙ may denote the saturation current of electrons.

Meanwhile, V₁ is a forward bias at a drain-side p-n junction, which leads to hole injection at the drain.

Accordingly, ΔV₁ affects a hole current Iₚ passing through a reverse-biased center junction, which can be organized as in Mathematical Equation 2 below: [Mathematical Equation 2] ${I}_{p} + Δ {I}_{p} = {I}_{sp} ⋅ exp \left(\frac{{V}_{biG 1}}{{V}_{T}}\right) \left\{exp\left(\frac{{V}_{1} + Δ {V}_{1}}{{V}_{T}}\right)-exp\left(\frac{- {V}_{2}}{{V}_{T}}\right)\right\}$

In Mathematical Equation 2, Iₛₚ may indicate the saturation current of holes, V_{biG1} may indicate a potential embedded in the channel region under the first gate terminal, and V₂ may indicate a central junction voltage.

When holes are injected into the channel region under the second gate terminal, the potential barrier height is changed, inducing a change in a source-side junction voltage V₃.

As a result, the change in Iₚ causes changes in V₃ and Iₙ as follows, which may be expressed by Mathematical Equations 3 and 4 below: [Mathematical Equation 3] ${V}_{3} + Δ {V}_{3} = {V}_{T} ⋅ ln \left(\frac{{I}_{p} + Δ {I}_{p} - {I}_{Rs}}{{I}_{sp}}+1\right)$ [Mathematical Equation 4] ${I}_{n} = {I}_{sn} ⋅ exp \left(\frac{{V}_{biG 2}}{{V}_{T}}\right) \left\{exp\left(\frac{{V}_{3} + Δ {V}_{3}}{{V}_{T}}\right)-exp\left(\frac{- {V}_{2}}{{V}_{T}}\right)\right\}$

In Mathematical Equations 3 and 4, I_{Rs} may indicate a recombination current at a source-side junction, and V_{biG2} may indicate a potential embedded in the channel region under the second gate terminal.

In the gated diode, the random fluctuation ΔIₙ is repeatedly fed back to Iₙ and Iₚ.

When electron injection increases slightly near a threshold, both electron and hole injections gradually increase, activating a positive feedback loop.

Accordingly, a generation-recombination current may be formed at a negligible level.

Conversely, when the electron injection is slightly reduced, a negative feedback loop that hinders carrier injection may be induced.

The total current of the gated diode may be organized using Mathematical Equation 5 below: [Mathematical Equation 5] $I = \left\{\begin{matrix}{I}_{sn} ⋅ exp \left(\frac{{V}_{biG 2} + {V}_{3}}{{V}_{T}}\right) + {I}_{sp} ⋅ exp \left(\frac{{V}_{biG 1} + {V}_{1}}{{V}_{T}}\right) , if positive feedback \\ \frac{{qn}_{i} {W}_{d}}{τ} ⋅ \left\{1-exp\left(\frac{- {V}_{2}}{2 {V}_{T}}\right)\right\} , if negative feedback\end{matrix}\right.$

In Mathematical Equation 5, I_{Rs} may indicate a recombination current at the source-side junction, V_{biG2} may indicate a potential embedded in the channel region under the second gate terminal, Iₛₚ may indicate the saturation current of holes, V_{biG1} may indicate a potential embedded in the channel region under the first gate terminal, V₂ may indicate a central junction voltage, V_{T} may indicate a thermal voltage, $\frac{kT}{q}$, I_{Rd} may indicate a recombination current at the drain-side junction, and Iₛₙ may indicate the saturation current of electrons.

Since the control transistor provides a pull-down operation, the output of the true random number generator may generate a random bit without additional circuits by outputting up with positive feedback and outputting down with negative feedback according to random fluctuations.

In detail, in the probabilistic region, a positive or negative feedback loop is randomly formed according to electron injection fluctuations.

If sufficient electrons are injected, the true random number generator generates a random bit "1" by forming a positive feedback loop, but if electron injection is insufficient, a random bit "0" is generated according to a negative feedback loop.

Accordingly, the present disclosure may implement a true random number generator that generates a random bit string in a simple structure without complex additional circuits by utilizing the feedback loop process of the channel region to utilize the gated diode that amplifies random fluctuation characteristics.

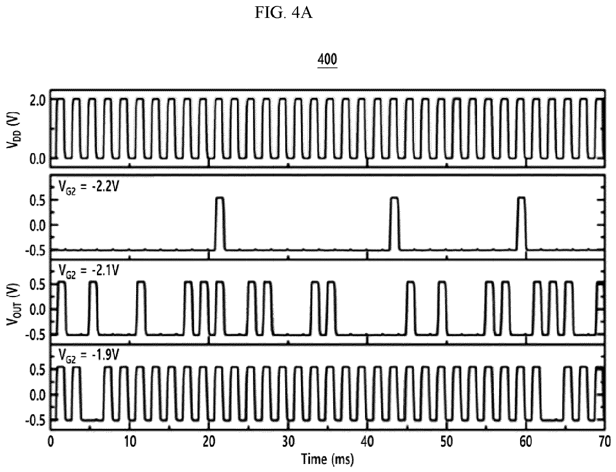

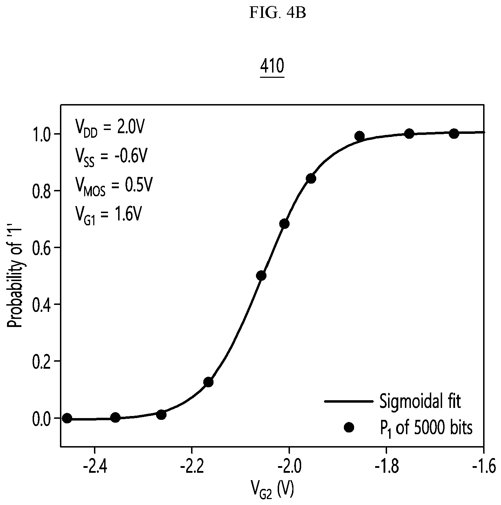

FIGS. 4A and 4B are drawings for explaining the probability control function of the gated diode-based true random number generator according to an embodiment of the present disclosure.

FIG. 4A illustrates a timing diagram related to the probability control function of the gated diode-based true random number generator according to an embodiment of the present disclosure.

FIG. 4B illustrates a probability distribution related to the probability control function of the gated diode-based true random number generator according to an embodiment of the present disclosure.

Referring to FIG. 4A, a timing diagram 400 illustrates a change in the second gate voltage V_{G2}, and the graph 410 illustrates a probability of a random bit "1" according to a change in the second gate voltage V_{G2}.

The transient response of V_{OUT} at the second gate voltage V_{G2} values of -2.2 V, -2.1 V and -1.9 V is shown in the timing.

As the height of the potential barrier in the channel region under the second gate terminal decreases due to an increase in the second gate voltage V_{G2}, the probability of positive feedback in the gated diode increases, so that "1" occurs more frequently.

In the graph 410, each data point is obtained from 5000 consecutive bits, and the occurrence probability of "1"(P₁) varies from 0 to 1 in a second gate voltage V_{G2} range of -2.3 V to -1.9 V, but P₁ confirms that a random bit is determined as "0" or " 1" out the second gate voltage V_{G2} range.

This sigmoid behavior is similar to the behavior of probabilistic neurons, which suggests the applicability of a true random number generator in probabilistic computing.

The random V_{OUT} of a random number generator (RNG) may be described using Mathematical Equation 6 below: [Mathematical Equation 6] ${V}_{OUT} \approx a ⋅ sgn \left\{1-\frac{1}{1 + exp \left(\frac{{V}_{G 2} - {V}_{0.5}}{b}\right)}-rand\right\}$

In Mathematical Equation 6, sgn (x) indicates a signum function, rand indicates a random number uniformly distributed between 0 and 1, V_{0.5} may indicate a V_{G2} value at P₁ = 0.5, and a and b may be fitting parameters.

Here, V_{0.5} and b may be set to -2.1 V and 0.06 V, respectively, for the true random number generator.

In addition, a (e.g., 0.5) may indicate a V_{OUT} range scaled according to the supply voltage of the true random number generator.

In Mathematical Equation 6, the n^{th} output voltage V_{OUT} may randomly represent -0.5 or 0.5 V depending on the probability determined by the second gate voltage V_{G2}.

Referring to the timing diagram 400 and the graph 410, the P₁ of output of the true random number generator according to an embodiment of the present disclosure increases from 0 to 1 in the form of a sigmoid function with the probability P₁ that the random bit "1" occurs according to the change in the second gate voltage V_{G2}.

Accordingly, the present disclosure may implement probability computing by controlling the probability of a random bit string in the true random number generator through voltage application.

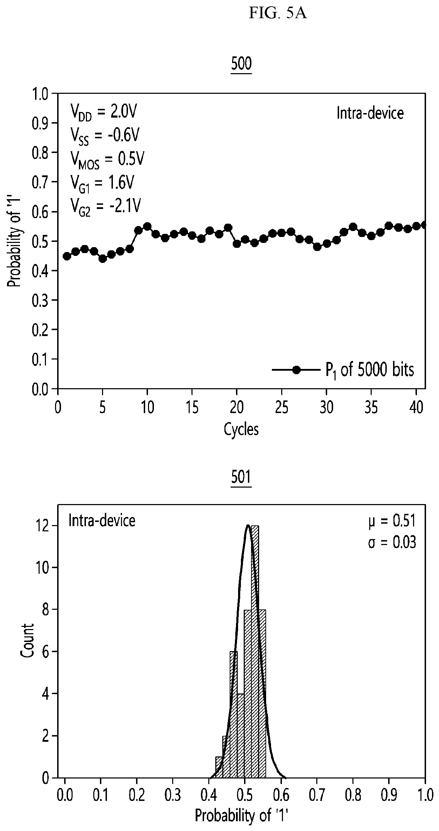

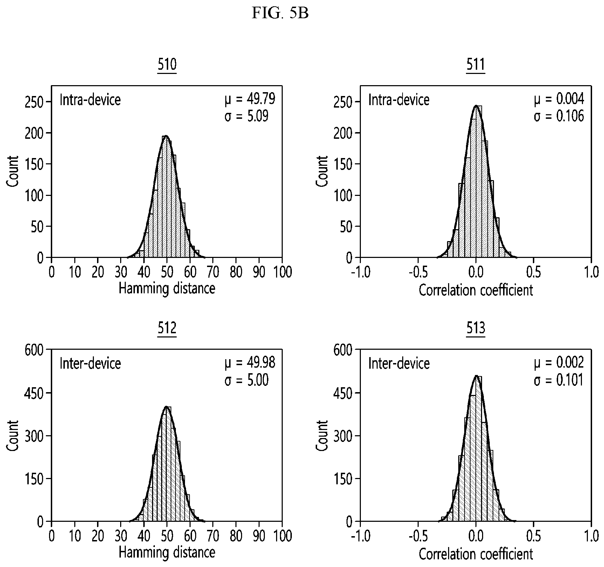

FIGS. 5A and 5B are drawings for explaining verification simulation results for the randomness of a random bit string generated by the gated diode-based true random number generator according to an embodiment of the present disclosure.

FIGS. 5A and 5B illustrate verification simulation results for the randomness of a random bit string generated by the gated diode-based true random number generator according to an embodiment of the present disclosure.

Referring to FIG. 5A, a graph 500 represents durability according to a repetition cycle for generating a random bit string, and a graph 501 represents the distribution of the occurrence probability of "1".

Referring to Fig. 5B, graphs 510 and 512 represent measurement results of hamming distance (HD) and graphs 511 and 513 represent correlation coefficient (CC), in relation to the randomness of generating a random bit string.

The hamming distance is obtained by measuring bits that are at different positions by comparing two bit strings, and in the present disclosure, 50 represents an ideal value.

The correlation coefficient is obtained by measuring the linear relationship between bit strings and is expressed as a value between -1 and 1. The closer the correlation coefficient is to 0, the less correlation there is.

The true random number generator according to an embodiment of the present disclosure may operate stably for 40 cycles (about 2× 10⁵ bits) and may generate a random bit string with a constant probability of P₁ average 0.51 and standard deviation 0.03.

The hamming distance and correlation coefficient between random bit strings generated by the same true random number generator are 49.79 and 0.004 on average, respectively, indicating that the true random number generator according to an embodiment of the present disclosure may generate random bit strings that are uncorrelated with each other.

In addition, when measuring the hamming distance and correlation coefficient between random bit strings generated by different true random number generators, they also show results close to the ideal values.

According to an embodiment of the present disclosure, the physically unclonability of the true random number generator can be verified according to the bit string generated by the true random number generator.

The physical unclonability of the true random number generator has the advantage of ensuring security by making reverse calculation impossible when building a security system.

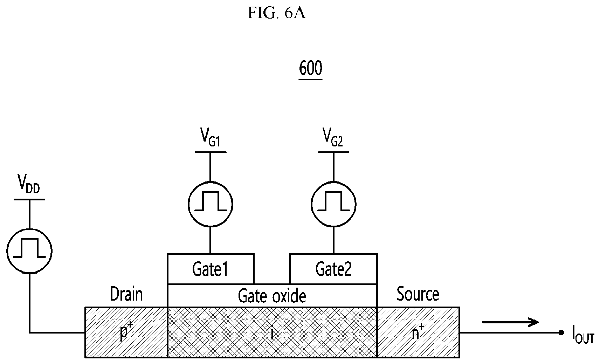

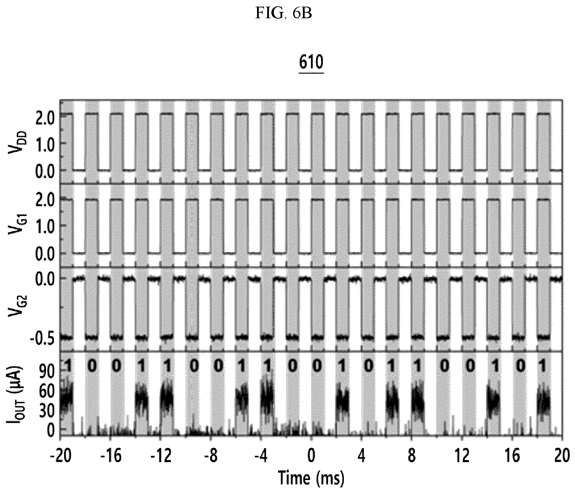

FIGS. 6A and 6B are drawings for explaining a gated diode-based true random number generator according to an embodiment of the present disclosure and its operating characteristics.

FIG. 6A illustrates a case where the gated diode-based true random number generator according to an embodiment of the present disclosure is configured with only a gated diode.

Referring to FIG. 6A, a gated diode-based true random number generator 600 according to an embodiment of the present disclosure is constituted of a single gated diode element, and the gated diode has a p⁺-i-n⁺ diode structure positioned between a drain terminal and a source terminal, a gate-insulating film is positioned on an intrinsic region of the p⁺-i-n⁺ diode structure, and two gate terminals are positioned on the gate-insulating film.

For example, the intrinsic region may correspond to the region i of the p⁺-i-n⁺ diode structure.

Since the gated diode-based true random number generator 600 according to an embodiment of the present disclosure is constituted of only a gated diode, it may be referred to as a single-element-based true random number generator.

In addition, since the current output of the gated diode-based true random number generator 600 is composed of a random number, it may be referred to as a current-output true random number generator.

The gated diode forms a potential barrier in the intrinsic region by electrostatic doping as the intrinsic region changes to one of an n* channel region and a p* channel region based on different voltages applied through the two gate terminals.

In addition, the gated diode may output a random bit as one of a positive feedback loop and a negative feedback loop related to the formed potential barrier is randomly formed according to the electron injection fluctuations based on the controlled electron injection.

The gated diode includes a p⁺ drain region between the first gate terminal of the two gate terminals and the drain terminal, and, when a positive voltage is applied to the first gate terminal, a region under the first gate terminal in the intrinsic region includes an n* channel region.

In addition, the gated diode includes an n⁺ source region between the second gate terminal of the two gate terminals and the source terminal, and, when a negative voltage is applied to the second gate terminal, a region under the second gate terminal in the intrinsic region may include a p* channel region.

FIG. 6B illustrates the operation characteristics of a gated diode-based true random number generator according to an embodiment of the present disclosure constituted of only a gated diode.

Referring to FIG. 6B, a graph 610 illustrates the operation characteristics of the gated diode-based true random number generator according to an embodiment of the present disclosure.

The gated diode-based true random number generator according to an embodiment of the present disclosure may implement a true random number generator by using the output current (I_{OUT}) of a source terminal, generated when a constant voltage pulse is applied to the gated diode with a drain voltage V_{DD}, a first gate voltage V_{G1} and a second gate voltage V_{G2}, as a random bit.

The gated diode-based true random number generator according to an embodiment of the present disclosure may implement a current-output true random number generator by randomly outputting a current from the source terminal due to the result of the random fluctuation characteristic generated in the gated diode.

The gated diode-based true random number generator according to an embodiment of the disclosure may control the magnitude of a potential barrier formed inside the channel of the gated diode by adjusting the magnitudes of the first gate voltage V_{G1} and the second gate voltage V_{G2} to induce a random fluctuation characteristic without a control transistor.

The gated diode-based true random number generator according to an embodiment of the present disclosure may operate based on a control operation that limits electron injection, such as applying only a drain voltage V_{DD} without applying a source voltage V_{SS}.

The gated diode-based true random number generator according to an embodiment of the present disclosure may output a random bit sequence of "10011001100101100101" by randomly switching an output current I_{OUT} to 0 µA (random number "0") or 60 µA (random number "1") when a drain voltage V_{DD} of 2.0 V is applied, a first gate voltage V_{G1} of 2.0 V is applied, the same second gate voltage V_{G2} of -0.5 V, and an input voltage is repeatedly applied in a pulse form.

The above-described output is not limited to the voltage range and current range described above as an example, and the output result of the random bit sequence is not limited either.

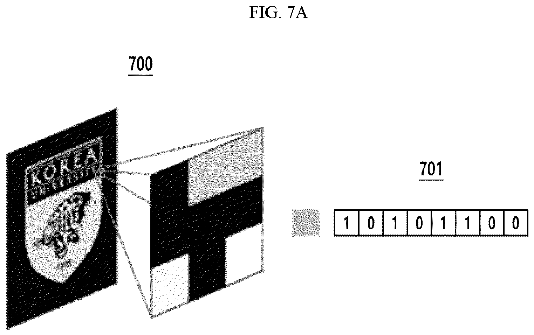

FIGS. 7A to 8 are drawings for explaining information encryption of using the gated diode-based true random number generator according to an embodiment of the present disclosure.

FIG. 7A illustrates a binary data representation method of a grayscale image, in relation to the information encryption using the gated diode-based true random number generator according to an embodiment of the present disclosure.

Referring to FIG. 7A, pixel information of a grayscale image 700 may be expressed as 8-bit binary data 701.

Accordingly, the grayscale image may be encrypted using the true random number generator.

To obtain a large-sized secret key, a random bit sequence may be extracted multiple times from the true random number generator with P₁ = 0.5.

Here, P₁ = 0.5 may indicate that the probability of "1" occurring among randomly generated random numbers "0" and "1 " is 50%.

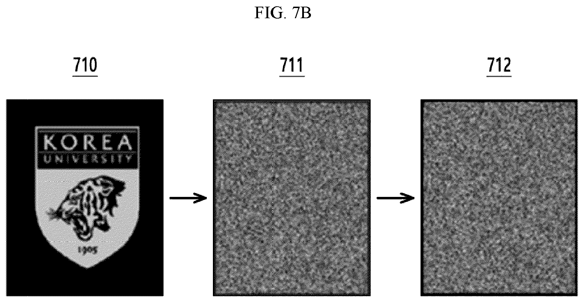

FIG. 7B illustrates a procedure for implementing information protection by combining an encryption key image with an original image in relation to information encryption using the gated diode-based true random number generator according to an embodiment of the present disclosure.

Referring to FIG. 7B, an encrypted image 712 is generated by performing XOR encryption on an original image 710 to be encrypted using a security key 711.

The encrypted image 712 is encrypted in the form of a random noise image to implement information security when communicating with a server or when storing.

Here, a security key image 711 is a secret key based on the random bit sequence of the true random number generator.

When an original image 710 and the secret key are encrypted, the encrypted image becomes unrecognizable, so the encrypted image may be maintained securely when communicating with the server or when storing it.

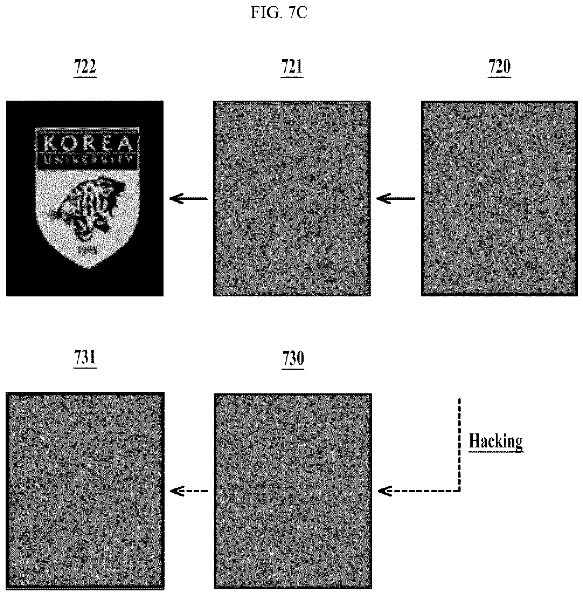

FIG. 7C illustrates an image decryption process of an attacker attempting to decrypt a duplicated secret key in relation to information encryption using the gated diode-based true random number generator according to an embodiment of the present disclosure.

Referring to FIG. 7C, when decrypting an original image 722 using a security key 721 for XOR encryption is performed from an encrypted image 720, but when decrypting is implemented using a duplicate key 730, an original image 722 fails to be implemented and a failed image 731 is obtained.

Even if a hacker extracts another secret key from another true random number generator of the same wafer for a decryption attack using the duplicate key 730, the image decryption fails due to physical unclonability. However, if decrypted using the same secret key used for image encryption, the encrypted image is completely restored.

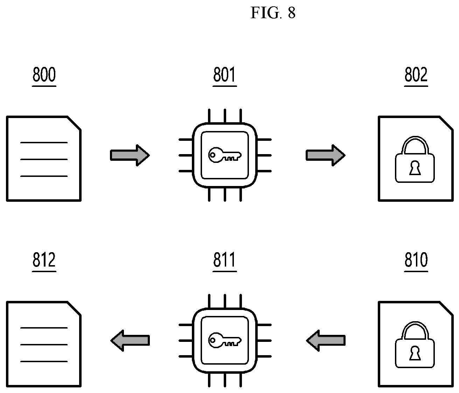

FIG. 8 illustrates a case where information encryption using the gated diode-based true random number generator according to an embodiment of the present disclosure is applied to data.

Referring to FIG. 8, encryption and decryption may be implemented by a procedure in which original data 800, which is data to be encrypted, is encrypted using a security key 801 to generate encrypted data 802, and encrypted data 810 is decrypted using a security key 811 to restore original data 812.

A security key generated by the true random number generator according to an embodiment of the present disclosure protects original data due to physical unclonability.

Accordingly, the present disclosure may implement the physical unclonable function (PUF) technology by stably generating a random number and generating a physically unduplicable random bit string through the gated diode-based true random number generator utilizing a CMOS process.

As apparent from above, the present disclosure can provide a true random number generator that implements information encryption by generating a random bit through a probabilistic switching operation via the feedback loop phenomenon in the channel region of a gated diode while controlling the probability of occurrence of the random bit through voltage application control.

The present disclosure can implement a true random number generator that generates a random bit string in a simple structure without complex additional circuits by utilizing the feedback loop process of the channel region to utilize a gated diode that amplifies random fluctuation characteristics.

The present disclosure can implement probability computing by controlling the probability of a random bit string in the true random number generator through voltage application.

The present disclosure can implement the physical unclonable function (PUF) technology by stably generating a random number and generating a physically unduplicable random bit string through the gated diode-based true random number generator utilizing a CMOS process.

In the above-described specific embodiments, elements included in the disclosure are expressed singular or plural in accordance with the specific embodiments shown.

It should be understood, however, that the singular or plural representations are to be chosen as appropriate to the situation presented for the purpose of description and that the above-described embodiments are not limited to the singular or plural constituent elements. The constituent elements expressed in plural may be composed of a single number, and constituent elements expressed in singular form may be composed of a plurality of elements.

In addition, the present disclosure has been described with reference to exemplary embodiments, but it should be understood that various modifications may be made without departing from the scope of the present disclosure.

Therefore, the scope of the present disclosure should not be limited by the embodiments, but should be determined by the following claims and equivalents to the following claims.

### [Description of Symbols]

| | | | |
|---|---|---|---|
| 300: | gated diode-based true random number generator | 301: | gated diode |
| 302: | control transistor | | |

## Claims

1. A gated diode-based true random number generator, comprising:
a gated diode where a p⁺-i-n⁺ diode structure is positioned between a drain terminal and a source terminal, a gate-insulating film is positioned on an intrinsic region of the p⁺-i-n⁺ diode structure, and two gate terminals are positioned on the gate-insulating film; and
a control transistor where a control drain terminal is connected to the source terminal, wherein the control gate terminal and the control source terminal are constituted together with the control drain terminal, and the control transistor controls electron injection into the p⁺-i-n⁺ diode structure according to control of a gate voltage V_{MOS} applied through the control gate terminal,
wherein the gated diode forms a potential barrier in an intrinsic region by electrostatic doping as the intrinsic region changes to one of an n* channel region and a p* channel region based on different voltages applied through the two gate terminals, and outputs a random bit as one of a positive feedback loop and a negative feedback loop related to the formed potential barrier is randomly formed according to electron injection fluctuations based on the controlled electron injection.

2. The gated diode-based true random number generator according to claim 1, wherein the gated diode comprises a p⁺ drain region between the first gate terminal of the two gate terminals and the drain terminal, and, when a positive voltage is applied to the first gate terminal, a region under the first gate terminal in the intrinsic region comprises an n* channel region, the n⁺ source region is comprised between the second gate terminal of the two gate terminals and the source terminal, and, when a negative voltage is applied to the second gate terminal, a region under the second gate terminal in the intrinsic region comprises a p* channel region.

3. The gated diode-based true random number generator according to claim 1 or 2, wherein the gated diode forms a positive feedback loop when the injected electrons are greater than reference electrons for forming positive feedback that latch-up a current based on the controlled electron injection, and a negative feedback loop phenomenon that the positive feedback loop is not formed is repeated when the injected electrons are less than the reference electrons, so that a current randomly fluctuates just before the latch-up.

4. The gated diode-based true random number generator according to one of claims 1 to 3, wherein concerning first and second gate voltage pulses applied through the first gate terminal and second gate terminal among the two gate terminals when a drain supply voltage is input through the drain terminal, the gated diode generates and outputs a positive bit "1" as the positive feedback loop is formed, and generates a negative bit "0" as the negative feedback loop is formed.

5. The gated diode-based true random number generator according to one of claims 1 to 4, wherein the control transistor induces a probabilistic region within the intrinsic region of the gated diode by controlling electron injection into the p⁺-i-n⁺ diode structure.

6. The gated diode-based true random number generator according to one of claims 1 to 5, wherein, concerning the first gate voltage pulse and second gate voltage pulse applied through the first gate terminal and second gate terminal among the two gate terminals when a drain supply voltage is input through the drain terminal, the gated diode randomly outputs one of a positive bit "1" and a negative bit "0" as an output voltage is randomly determined.

7. The gated diode-based true random number generator according to claim 6, wherein the gated diode controls a height of the potential barrier as voltage applied through the second gate terminal is adjusted and a probability of forming a positive feedback loop based on the controlled potential barrier height.

8. The gated diode-based true random number generator according to claim 6 or 7, wherein the gated diode increases an output probability of the positive bit "1 " by lowering the height of the potential barrier when the voltage applied through the second gate terminal increases, and increases an output probability of the negative bit "0" by increasing the height of the potential barrier when the voltage applied through the second gate terminal decreases.

9. The gated diode-based true random number generator according to one of claims 1 to 8, wherein the outputted random bit is converted into an image based on pixel information obtained from binary data to generate a secret key composed of a random bit string, and converted into encrypted data by XOR-encrypting an original image using the generated security key.

10. The gated diode-based true random number generator according to claim 9, wherein the encrypted data is encrypted in a form of a random noise image and is decrypted only with the generated security key.

## Patentansprüche

1. Auf einer Gated-Diode basierender echter Zufallszahlengenerator, umfassend:
eine Gated-Diode, bei der eine p⁺-i-n⁺-Diodenstruktur zwischen einem Drain-Anschluss und einem Source-Anschluss angeordnet ist, ein Gate-Isolationsfilm auf einem intrinsischen Bereich der p⁺-i-n⁺-Diodenstruktur angeordnet ist und zwei Gate-Anschlüsse auf dem Gate-Isolationsfilm angeordnet sind; und
einen Steuertransistor, bei dem ein Steuer-Drain-Anschluss mit dem Source-Anschluss verbunden ist, wobei der Steuer-Gate-Anschluss und der Steuer-Source-Anschluss zusammen mit dem Steuer-Drain-Anschluss gebildet sind, und der Steuertransistor die Elektroneninjektion in die p⁺-i-n⁺-Diodenstruktur entsprechend der Steuerung einer über den Steuer-Gate-Anschluss angelegten Gate-Spannung V_{MOS} steuert,
wobei die Gated-Diode durch elektrostatische Dotierung eine Potentialbarriere in einem intrinsischen Bereich bildet, während sich der intrinsische Bereich basierend auf über die beiden Gate-Anschlüsse angelegten unterschiedlichen Spannungen in einen n*-Kanalbereich oder einen p*-Kanalbereich verändert, und ein Zufallsbit ausgibt, wenn zufällig entweder eine positive oder eine negative Rückkopplungsschleife in Bezug auf die gebildete Potentialbarriere entsteht, entsprechend den Schwankungen der Elektroneninjektion basierend auf der gesteuerten Elektroneninjektion.

2. Auf einer Gated-Diode basierender echter Zufallszahlengenerator gemäß Anspruch 1, wobei die Gated-Diode einen p⁺-Drainbereich zwischen dem ersten Gate-Anschluss der beiden Gate-Anschlüsse und dem Drain-Anschluss umfasst und, wenn eine positive Spannung an den ersten Gate-Anschluss angelegt wird, ein Bereich unter dem ersten Gate-Anschluss im intrinsischen Bereich einen n*-Kanalbereich umfasst, der n⁺-Source-Bereich zwischen dem zweiten Gate-Anschluss der beiden Gate-Anschlüsse und dem Source-Anschluss liegt und, wenn eine negative Spannung an den zweiten Gate-Anschluss angelegt wird, ein Bereich unter dem zweiten Gate-Anschluss im intrinsischen Bereich einen p*-Kanalbereich umfasst.

3. Auf einer Gated-Diode basierender echter Zufallszahlengenerator gemäß Anspruch 1 oder 2, wobei die Gated-Diode eine positive Rückkopplungsschleife bildet, wenn die injizierten Elektronen höher sind als Referenzelektronen, um eine positive Rückkopplung zu erzeugen, die einen Strom basierend auf der gesteuerten Elektroneninjektion einrastet, und ein Phänomen einer negativen Rückkopplungsschleife, bei dem die positive Rückkopplungsschleife nicht gebildet wird, wiederholt wird, wenn die injizierten Elektronen geringer sind als die Referenzelektronen, sodass ein Strom unmittelbar vor dem Einrasten zufällig schwankt.

4. Auf einer Gated-Diode basierender echter Zufallszahlengenerator gemäß einem der Ansprüche 1 bis 3, wobei hinsichtlich erster und zweiter Gate-Spannungsimpulse, die über den ersten Gate-Anschluss und den zweiten Gate-Anschluss unter den beiden Gate-Anschlüssen angelegt werden, wenn eine Drain-Zufuhrspannung über den Drain-Anschluss eingegeben wird, die Gated-Diode ein positives Bit "1" erzeugt und ausgibt, wenn die positive Rückkopplungsschleife gebildet wird, und ein negatives Bit "0" erzeugt, wenn die negative Rückkopplungsschleife gebildet wird.

5. Auf einer Gated-Diode basierender echter Zufallszahlengenerator gemäß einem der Ansprüche 1 bis 4, wobei der Steuertransistor durch Steuerung der Elektroneninjektion in die p⁺-i-n⁺-Diodenstruktur einen Wahrscheinlichkeitsbereich innerhalb des intrinsischen Bereichs der Gated-Diode induziert.

6. Auf einer Gated-Diode basierender echter Zufallszahlengenerator gemäß einem der Ansprüche 1 bis 5, wobei hinsichtlich des ersten Gate-Spannungsimpulses und des zweiten Gate-Spannungsimpulses, die über den ersten Gate-Anschluss und den zweiten Gate-Anschluss unter den beiden Gate-Anschlüssen angelegt werden, wenn eine Drain-Zufuhrspannung über den Drain-Anschluss eingegeben wird, die Gated-Diode zufällig entweder ein positives Bit "1" oder ein negatives Bit "0" ausgibt, da eine Ausgangsspannung zufällig bestimmt ist.

7. Auf einer Gated-Diode basierender echter Zufallszahlengenerator gemäß Anspruch 6, wobei die Gated-Diode die Höhe der Potentialbarriere steuert, wenn die über den zweiten Gate-Anschluss angelegte Spannung angepasst wird, und eine Wahrscheinlichkeit der Bildung einer positiven Rückkopplungsschleife basierend auf der gesteuerten Höhe der Potentialbarriere.

8. Auf einer Gated-Diode basierender echter Zufallszahlengenerator gemäß Anspruch 6 oder 7, wobei die Gated-Diode die Ausgabewahrscheinlichkeit des positiven Bits "1" erhöht, indem die Höhe der Potentialbarriere verringert wird, wenn die über den zweiten Gate-Anschluss angelegte Spannung erhöht wird, und die Ausgabewahrscheinlichkeit des negativen Bits "0" erhöht, indem die Höhe der Potentialbarriere erhöht wird, wenn die über den zweiten Gate-Anschluss angelegte Spannung verringert wird.

9. Auf einer Gated-Diode basierender echter Zufallszahlengenerator gemäß einem der Ansprüche 1 bis 8, wobei das ausgegebene Zufallsbit basierend auf Pixelinformationen, die aus binären Daten gewonnen werden, in ein Bild umgewandelt wird, um einen aus einer zufälligen Bitfolge bestehenden Sicherheitsschlüssel zu erzeugen, und durch XOR-Verschlüsselung eines Originalbildes unter Verwendung des erzeugten Sicherheitsschlüssels in verschlüsselte Daten umgewandelt wird.

10. Auf einer Gated-Diode basierender echter Zufallszahlengenerator gemäß Anspruch 9, wobei die verschlüsselten Daten in Form eines Zufallsrauschbildes verschlüsselt werden und nur mit dem generierten Sicherheitsschlüssel entschlüsselt werden.

## Revendications

1. Générateur de nombres aléatoires réels basé sur une diode à grille, comprenant :
une diode à grille où une structure de diode p⁺-i-n⁺ est positionnée entre une borne de drain et une borne de source, un film d'isolation de grille est positionné sur une région intrinsèque de la structure de diode p⁺-i-n⁺, et deux bornes de grille sont positionnées sur le film d'isolation de grille ; et
un transistor de commande où une borne de drain de commande est connectée à la borne de source, dans lequel la borne de grille de commande et la borne de source de commande sont constituées conjointement avec la borne de drain de commande, et le transistor de commande commande l'injection d'électrons dans la structure de diode p⁺-i-n⁺ selon la commande d'une tension de grille V_{MOS} appliquée à travers la borne de grille de commande,
dans lequel la diode à grille forme une barrière de potentiel dans une région intrinsèque par dopage électrostatique lorsque la région intrinsèque passe à l'une d'une région de canal n* et d'une région de canal p* sur la base de différentes tensions appliquées à travers les deux bornes de grille, et sort un bit aléatoire comme l'une d'une boucle de rétroaction positive et d'une boucle de rétroaction négative liée à la barrière de potentiel formée est formée de manière aléatoire selon des fluctuations d'injection d'électrons sur la base de l'injection d'électrons commandée.

2. Générateur de nombres aléatoires réels basé sur une diode à grille selon la revendication 1, dans lequel la diode à grille comprend une région de drain p⁺ entre la première borne de grille des deux bornes de grille et la borne de drain, et, lorsqu'une tension positive est appliquée à la première borne de grille, une région sous la première borne de grille dans la région intrinsèque comprend une région de canal n*, la région de source n⁺ est comprise entre la seconde borne de grille des deux bornes de grille et la borne de source, et, lorsqu'une tension négative est appliquée à la seconde borne de grille, une région sous la seconde borne de grille dans la région intrinsèque comprend une région de canal p*.

3. Générateur de nombres aléatoires réels basé sur une diode à grille selon la revendication 1 ou 2, dans lequel la diode à grille forme une boucle de rétroaction positive lorsque les électrons injectés sont supérieurs aux électrons de référence pour former une rétroaction positive qui verrouille un courant sur la base de l'injection d'électrons commandée, et un phénomène de boucle de rétroaction négative que la boucle de rétroaction positive n'est pas formée est répété lorsque les électrons injectés sont inférieurs aux électrons de référence, de sorte qu'un courant fluctue de manière aléatoire juste avant le verrouillage.

4. Générateur de nombres aléatoires réels basé sur une diode à grille selon l'une des revendications 1 à 3, dans lequel concernant des première et seconde impulsions de tension de grille appliquées à travers la première borne de grille et la seconde borne de grille parmi les deux bornes de grille lorsqu'une tension d'alimentation de drain est entrée à travers la borne de drain, la diode à grille génère et sort un bit positif « 1 » lorsque la boucle de rétroaction positive est formée, et génère un bit négatif « 0 » lorsque la boucle de rétroaction négative est formée.

5. Générateur de nombres aléatoires réels basé sur une diode à grille selon l'une des revendications 1 à 4, dans lequel le transistor de commande induit une région probabiliste dans la région intrinsèque de la diode à grille en commandant l'injection d'électrons dans la structure de diode p⁺-i-n⁺.

6. Générateur de nombres aléatoires réels basé sur une diode à grille selon l'une des revendications 1 à 5, dans lequel, concernant la première impulsion de tension de grille et la seconde impulsion de tension de grille appliquées à travers la première borne de grille et la seconde borne de grille parmi les deux bornes de grille lorsqu'une tension d'alimentation de drain est entrée à travers la borne de drain, la diode à grille sort de manière aléatoire l'un d'un bit positif « 1 » et d'un bit négatif « 0 » lorsqu'une tension de sortie est déterminée de manière aléatoire.

7. Générateur de nombres aléatoires réels basé sur une diode à grille selon la revendication 6, dans lequel la diode à grille commande une hauteur de la barrière de potentiel lorsque la tension appliquée à travers la seconde borne de grille est ajustée et une probabilité de formation d'une boucle de rétroaction positive sur la base de la hauteur de barrière de potentiel commandée.

8. Générateur de nombres aléatoires réels basé sur une diode à grille selon la revendication 6 ou 7, dans lequel la diode à grille augmente une probabilité de sortie du bit positif « 1 » en abaissant la hauteur de la barrière de potentiel lorsque la tension appliquée à travers la seconde borne de grille augmente, et augmente une probabilité de sortie du bit négatif « 0 » en augmentant la hauteur de la barrière de potentiel lorsque la tension appliquée à travers la seconde borne de grille diminue.

9. Générateur de nombres aléatoires réels basé sur une diode à grille selon l'une des revendications 1 à 8, dans lequel le bit aléatoire sorti est converti en une image sur la base d'informations de pixel obtenues à partir de données binaires pour générer une clé secrète composée d'une chaîne de bits aléatoire, et converti en données cryptées par cryptage OU exclusif d'une image originale en utilisant la clé de sécurité générée.

10. Générateur de nombres aléatoires réels basé sur une diode à grille selon la revendication 9, dans lequel les données cryptées sont cryptées sous la forme d'une image de bruit aléatoire et sont décryptées uniquement avec la clé de sécurité générée.
